# EUROPEAN PATENT APPLICATION

(11) **EP 4 375 848 A1**
(43) Date of publication of application: **29.05.2024**
(21) Application number: 23192935.7
(22) Date of filing: 23.08.2023
(51) Int. Cl.: G06F 16/2453

(54) **METHOD FOR EXECUTING QUERY AND QUERY EXECUTION PROGRAM**

(30) Priority: 22.11.2022 JP 2022186949
(71) Applicant: FUJITSU LIMITED, Kawasaki-shi, Kanagawa 211-8588 (JP)
(72) Inventor: IMAI, Tomoharu, Kawasaki-shi, Kanagawa, 211-8588 (JP); YOKOTA, Koichi, Kawasaki-shi, Kanagawa, 211-8588 (JP); NODA, Masahide, Kawasaki-shi, Kanagawa, 211-8588 (JP); GUO, Zhaogong, Kawasaki-shi, Kanagawa, 211-8588 (JP); KUNIKAWA, Masashi, Kawasaki-shi, Kanagawa, 211-8588 (JP)
(74) Representative: Hoffmann Eitle

(57) **Abstract**

A method for executing a query includes identifying, by a computer, a static entity among entities in a first query that is input to a digital twin in which a predetermined relationship is provided between entities, the static entity having data content that is infrequently changed, dividing the first query into a plurality of divided queries with the identified static entity set as a starting point, and executing the divided queries in parallel.

## Description

### FIELD

The embodiment discussed herein is related to a method for executing a query and a query execution program.

### BACKGROUND

A digital twin enables representation of an actually operating target object in a virtual space as a model. Various services may be provided when an application uses information held by the digital twin. The digital twin is data having relationships and represented by three data types, an entity, a property, and a relationship. A link between pieces of data may be searched for by executing a query to trace the relation in the digital twin.

As the related art of information searching, for example, there is a technique in which an intermediate representation of a tree structure is generated by pre-analysis of XML data to be stored in a database, and a search result is obtained by tracking the tree structure by a search using indices. There is also a technique in which a thread generation unit divides a continuous event processing query with operators, extracts partial queries executable in parallel based on operator-by-operator constraint conditions, and executes the partial queries in parallel. There is also a technique in which, in modeling a real world, a unique execution space is generated by generating an instance and accessing the instance to perform a process, thereby to flexibly change a system configuration in accordance with the amount of the execution space. There is also a technique in which, in a system for management and analysis of a marketing campaign, standardized metadata is assigned to each piece of data and processing to dynamically and statically cooperate to execute, thereby performing real-time and interactive data processing. There is also a technique in which, in a system for extracting data from big data, the data is extracted from a plurality of types of relational databases by processing, in parallel, data obtained by generating a data obtaining query of each relational database upon arrival of a search query.

Japanese Laid-open Patent Publication No. 2001-34619, Japanese National Publication of International Patent Application No. 2016-514299, Japanese Laid-open Patent Publication No. 6-332711, U.S. Patent No. 7707163, and U.S. Patent No. 10268722 are disclosed as related art.

### PROBLEMS

According to the related art, for example, in a case where the search using the indices is applied to digital twins, information of all the digital twins is desirably registered in the indices. Entities of the digital twins have static and dynamic characteristics, and it is difficult to search, by using indices, for dynamic entities the information of which is frequently changed.

According to the related art, the data processing such as the search is simply executed based on the input query, and neither the static characteristic nor the dynamic characteristic of the entities is not considered. Consequently, to obtain entity that tracks the relationship in multiple stages, the query is desirably input many times. However, this takes time, and processing efficiency of query execution is not necessarily improved.

In one aspect, an object of the present disclosure is to enable improvement of processing efficiency of query execution by appropriately dividing a query based on a characteristic of an entity.

### [Effects of Invention]

In the aspect of the present disclosure, an effect of enabling improvement or the processing efficiency of the query execution is produced by appropriately dividing the query based on the characteristic of the entity.

### SUMMARY

According to an aspect of the embodiment, a method for executing a query includes identifying, by a computer, a static entity among entities in a first query that is input to a digital twin in which a predetermined relationship is provided between entities, the static entity having data content that is infrequently changed, dividing the first query into a plurality of divided queries with the identified static entity set as a starting point, and executing the divided queries in parallel.

### BRIEF DESCRIPTION OF DRAWINGS

FIG. 1 is a diagram illustrating an outline of a method for executing a query according to an embodiment;
FIG. 2 is a diagram illustrating an example of a flow of data processing executed by a query execution apparatus;
FIG. 3 is a diagram illustrating a data processing example according to an existing technique;
FIG. 4 is a timing chart illustrating data processing time according to the existing technique;
FIG. 5 is a diagram illustrating an example of a data structure of a digital twin applied to the embodiment;
FIG. 6A is a diagram illustrating an example of characteristic-by-characteristic classification of entities according to the embodiment;
FIG. 6B is a diagram illustrating an example of a table indicating whether an upper-lower relationship is present between the entities;
FIG. 7A is a diagram illustrating a problem with division with dynamic entities set as starting points (No. 1);
FIG. 7B is a diagram illustrating the problem with the division with the dynamic entities set as the starting points (No. 2);
FIG. 8 is a diagram illustrating an example of a query parallel execution pattern table;
FIG. 9 is a diagram illustrating an example of actual data of a digital twin;
FIG. 10 is a diagram illustrating a detailed example of query data at a time of parallel execution;
FIG. 11 is a timing chart illustrating data processing time according to the embodiment;
FIG. 12 is a diagram illustrating another example of the data processing executed by the query execution apparatus;
FIG. 13 is a functional block diagram of the query execution apparatus according to the embodiment;
FIG. 14 is a diagram illustrating an example of a hardware configuration of the query execution apparatus;
FIG. 15 is a flowchart illustrating a processing example executed by the query execution apparatus;
FIG. 16 is a flowchart illustrating the details of the processing example executed by the query execution apparatus (No. 1); and
FIG. 17 is a flowchart illustrating the details of the processing example executed by the query execution apparatus (No. 2).

### DESCRIPTION OF EMBODIMENT

Hereinafter, an embodiment of a method for executing a query and a query execution program according to the present disclosure will be described in detail with reference to the drawings.

### (Example of Embodiment of Method for Executing Query According to Embodiment)

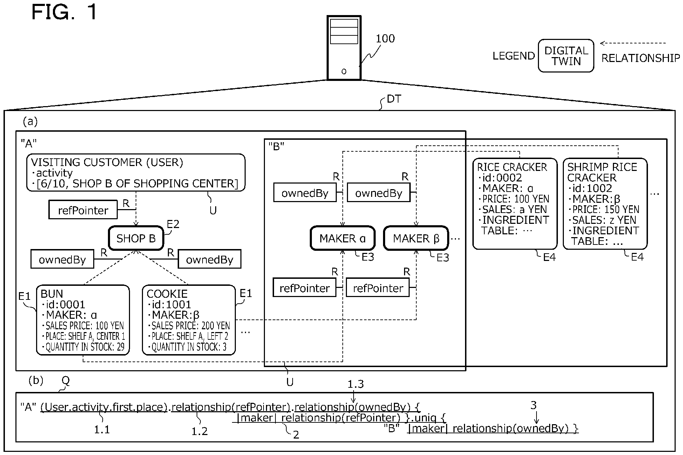

FIG. 1 is a diagram illustrating an outline of a method for executing a query according to the embodiment. For example, when accessing a digital twin, a query execution apparatus 100 according to the embodiment extracts a query based on relationships between entities of the digital twin to determine classification of static or dynamic characteristic of the entities in the query. Based on the characteristics of the entities, the query execution apparatus 100 divides the query and executes the divided queries in parallel. The query execution apparatus 100 is a computer (information processing apparatus) such as a server.

In (a) of FIG. 1, an example of a data structure of the digital twin is illustrated. A digital twin (DT) is represented by three data types, an entity E, a property P, and a relation (relationship) R.

The query execution apparatus 100 according to the embodiment is described with an example of data processing (query processing) which, for example, searches the digital twin based on an activity history related to purchases by a user for the digital twin and creates a recommendation list of products for the user. As the activity history, it is assumed that the user (visiting customer) has visited a shop B of a shopping center and purchased a product.

An entity E is, for example, data of an owner or an item owned by the owner. In the example illustrated in (a) of FIG. 1, entities E are a user U, products E1 to be purchased, and a shop E2 that owns the products. When the shop E2 is the owner, owned items of the owner (shop E2) are the products E1. The property P is, for example, data of the activity history of the user (visiting customer) U who purchases the owned items (products E1) of the owner. The relationship R is data indicating the relationship between the property and the entity E.

An example of a flow of the data processing executed by the query execution apparatus 100 is, for example, 1 to 5 below. 1: The activity history related to the purchase of the visiting customer (user) is obtained, and a set of the products E1 owned by the shop E2 that the visiting customer visited before are obtained. 2: Makers α, β, ... (E3, entities) of the respective products E1 are extracted as obtaining targets. 3: Products E4 (entities) respectively manufactured by the makers α, β, ... are obtained. 4: A product recommendation list for the user U is generated from a list of the obtained products (including prices and sales information). 5: The product recommendation list is presented to the user U.

The products E1 owned by the shop E2 are frequently changed due to sold-out or changes in a product lineup, and, in a certain time period, the data of the products E1 is not necessarily present (for example, deleted).

For example, owendBy indicates an upper-lower relationship in the real world for a relation of entities, and refPointer does not indicate the upper-lower relationship of a relation of entities. In (a) of FIG. 1, relationships R is indicated by dotted lines.

The query execution apparatus 100 according to the embodiment extracts, based on the relation indicating the upper-lower relationship, a dynamic or static characteristic of each entity that is normally unknown. In a case where the upper-lower relationship of the entities exists, the query execution apparatus 100 determines classification that creation and deletion of an upper entity are infrequent (static entity) and creation and deletion of a lower entity are frequent (dynamic entity).

The creation and deletion of the static entity are infrequent, and the number of static entities is small. Thus, it is highly probable that an entity exists even when a query is obtained a plurality of times and the same entity is referred to. For this reason, the query execution apparatus 100 uses the static entity as the starting point of parallel processing. For example, upon obtaining a query, the query execution apparatus 100 divides this query as illustrated in (b) of FIG. 1.

In (b) of FIG. 1, an example of a query Q obtained by the query execution apparatus 100 (input to the query execution apparatus 100) is illustrated. This single statement of the query Q indicates data processing for the digital twin. An outline of processing requests indicated by the query Q is described row by row (three rows).

1.1: A link of the shop B that the user U has visited is obtained from the activity of the digital twin. 1.2: The entity of the shop B is obtained by tracking the relation of the link of the shop B. 1.3: The entities of the products in stock having an owendBy relation to the shop B are obtained. 2: The digital twin of the maker is obtained by tracking the relation of each product in stock of the link to the maker in the digital twin, and duplication is deleted. 3: The digital twin of the product having the owendBy relation to the digital twin of each maker is obtained.

The query execution apparatus 100 according to the embodiment decomposes a query Q of the single statement with a static entity in the middle of the query Q set as the starting point and executes data obtaining in parallel by using the decomposed queries.

For example, the query execution apparatus 100 decomposes the query Q illustrated in (b) of FIG. 1 into two queries, "A" and "B". One of the queries "A" after the decomposition corresponds to the first and second rows of the original query Q, and the other query "B" corresponds to the third row of the original query Q.

In (a) of FIG. 1, ranges of data processing respectively corresponding to the decomposed queries "A" and "B" illustrated in (b) of FIG. 1 are indicated. The query execution apparatus 100 determines that the shop B and the makers α, β, ... are static entities.

For the entity E, since much reference is made to the shop B (E2) by using owendBy from the lower products E1, the query execution apparatus 100 determines that the shop B (E2) is a static entity. Since much reference is made to the makers α, β, ... (E3) by using owendBy from the lower products E4, the query execution apparatus 100 determines that the makers α, β, ... (E3) are static entities. In contrast, since much reference is not made to the user (visiting customer) U by using owendBy, the query execution apparatus 100 determines that the user (visiting customer) U is a dynamic entity.

In (a) of FIG. 1, the processing corresponding to the query processing "A" of the query execution apparatus 100 includes processing of obtaining of the shop E2 as a static entity and the static entities E3 of the makers α, β, ... as static entities. The processing corresponding to the query processing "B" of the query execution apparatus 100 includes processing of obtaining of the static entities E3 of the makers α, β, ... and the entities E4 of the products manufactured by the makers α, β, ....

As illustrated in (a) of FIG. 1, it is assumed that the visiting customer U of the shop B purchases products, a "BUN" and a "COOKIE". In this case, due to the above-described processing, the query execution apparatus 100 presents, as a product recommendation list to the visiting customer U, other products, a "RICE CRACKER" and a "SHRIMP RICE CRACKER" manufactured by the makers α and β of the products, the "BUN" and the "COOKIE".

Data content of the entity E2 (shop B), the relationship R of which is the owner (such as ownedBy), is infrequently changed. After the first query, the query execution apparatus 100 according to the embodiment performs data processing for search based on a prediction that the query with this entity E2 set as the starting point will appear again in the second and subsequent queries. Due to the data processing with the entity E2, data content of which is infrequently changed, set as the starting point, a query with a low probability of being wasted may be input. The query execution apparatus 100 reduces data processing time by dividing the query Q with the entity E2 as the starting point and executing the query Q in parallel.

There are many changes in data content of the entities other than the owner (such as ownedBy), for example, the products E1 (frequently changed). Thus, when these entities E1 are set as the starting point, the probability of wasting speculative (parallel) execution is high.

For example, based on the fact that the query may be generated from processing by an application or a service that uses digital twins, the query execution apparatus 100 uses the relation of the upper-lower relationship of in the real world between the entities to determine classification of the characteristics of the entities into static/dynamic. The query execution apparatus 100 decomposes the query with the static entity as the starting point and executes the decomposed queries in parallel.

For example, the data processing based on the requested query may be performed in short time by executing, in parallel, the two decomposed queries "A" and "B" as illustrated in (b) of FIG. 1. The query execution apparatus 100 may obtain the entity that tracks multistage relations, in short time.

### (Description of Existing Technique)

The existing technical content and problems are described. It is assumed that a flow of data processing executed by a query execution apparatus of the existing technique (use case) is 1 to 4 below as is the case with the above-described embodiment.

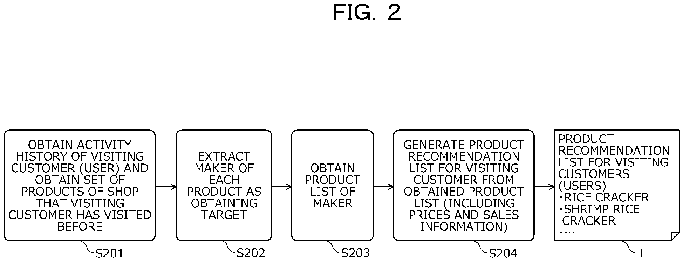

FIG. 2 is a diagram illustrating an example of the flow of the data processing executed by the query execution apparatus. In the example of FIG. 2, an example of the data processing corresponding to that illustrated in FIG. 1 is illustrated. The query execution apparatus 100 sequentially executes the following processes 1 to 5. 1: The activity history related to the purchase of the visiting customer (user U) is obtained, and a set of the products owned by the shop that the visiting customer has visited before are obtained (step S201). 2: The maker of each product is extracted as the obtaining target (step S202). 3: A product list of the maker is obtained (step S203). 4: A product recommendation list L for the visiting customer is generated from the obtained product list (including prices and sales information) (step S204). 5: The product recommendation list L is presented to the user U.

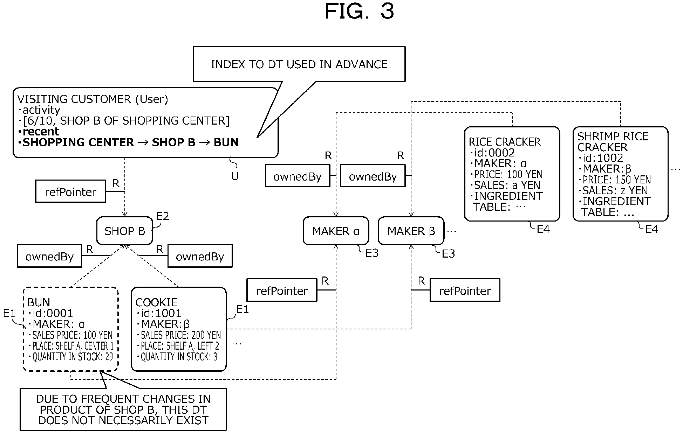

FIG. 3 is a diagram illustrating a data processing example according to the existing technique. It is assumed that a data structure example itself of the digital twin illustrated in FIG. 3 is similar to that of the embodiment. A case where the data processing illustrated in FIG. 2 is performed with the existing technique is discussed. For example, it is assumed that a recent (shopping center -> shop B -> bun) index has already been created for the entity (activity) of the visiting customer U as an index to the digital twin used in advance by the data processing apparatus.

As described above, in a case where the search using an index technique is performed on the digital twins, it is desirable that all the digital twins be predefined and the data be not changed. However, in the digital twins, entities include the entities having a dynamic characteristic that are frequently created and deleted due to changes in the lineup, sold-out, or the like of the products in the shop B as indicated with the product E1 "BUN" of FIG. 3. Thus, the search by using the index technique is unable to be applied to the digital twins.

According to the existing technique, in a case where 1000 products E1 being the entities exist for each of the makers α, β, ..., it is desired that a large number (for example, 1000 × number of makers) of relations be tracked in order to output desired information. Thus, the data processing time increases.

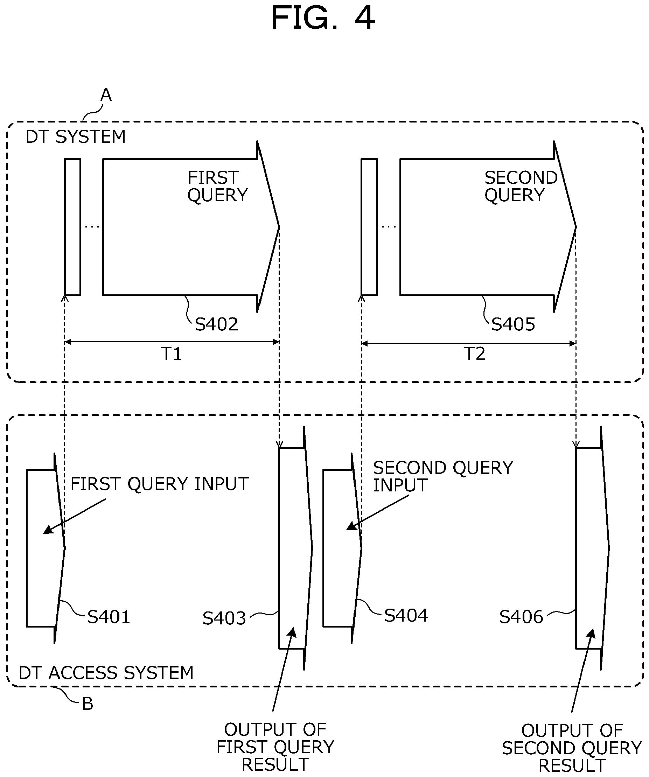

FIG. 4 is a timing chart illustrating the data processing time according to the existing technique. In FIG. 4, a configuration example in which a digital twin (DT) access system B accesses a DT system A that holds digital twin data is illustrated.

In response to input of a first query (step S401), the DT access system B transmits an Api request to the DT system A. The DT system A executes first query processing in processing time T1 (step S402) and outputs a first query result to the DT access system B. The DT access system B outputs the first query result (step S403). After that, in response to input of a second query (step S404), the DT access system B transmits an Api request to the DT system A.

The DT system A executes second query processing in processing time T2 (step S405) and outputs a second query result to the DT access system B. The DT access system B outputs the second query result (step S406). In a time axis on the horizontal axis illustrated in FIG. 4, the T1 and T2 parts, which are the query execution period, actually occupy most of the time.

According to the existing technique, the query processing is sequentially performed query by query. Thus, as the number of queries increases, the entire query processing time cumulatively increases in the DT system A (T1 + T2). For example, in the data processing illustrated in FIG. 3, execution of the queries is desired number of times for a large number of the relations (for example, 1000 × number of makers), and time is consumed to process the data.

### (Detailed Description of Data Processing according to Embodiment)

The details of the data processing performed by the query execution apparatus 100 according to the embodiment are described below.

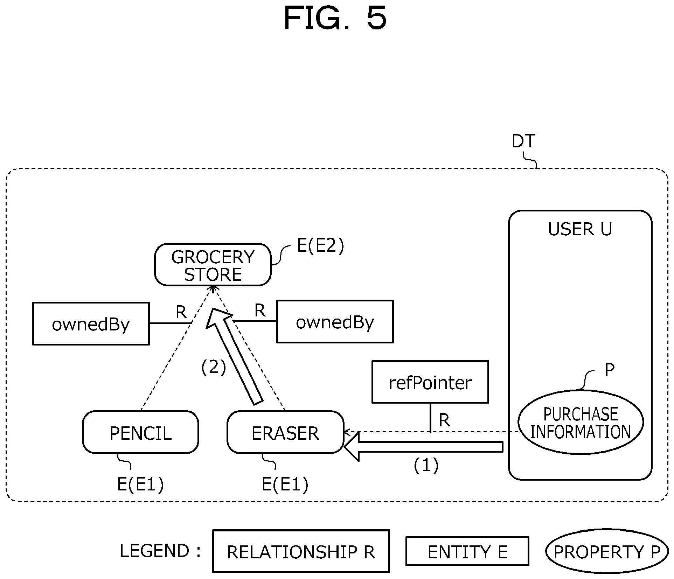

FIG. 5 is a diagram illustrating an example of a data structure of a digital twin applied to the embodiment. The digital twin (DT) is represented by three data types, the entity E, the property P, and the relationship R. The digital twin is implemented by, for example, next generation service interfaces-linked data (NGSI-LD) standardized by the European Telecommunications Standardization Institute (ETSI) or an Azure (registered trademark) digital twins definition language (DTDL).

In FIG. 5, the activity history (purchase history) of the visiting customer (user) U is the property P. The relationship R is represented by using, for example, refPointer and ownedBy. For example, (1) "USER PURCHASE INFORMATION refPointer ERASER" means that an eraser (entity E1) exists in the purchase information (property P) of the user U. (2) "ERASER ownedBy GROCERY STORE" means that the eraser (E1) is owned by a grocery store (E2). By tracking the relationship R, linked pieces of the data may have a meaning.

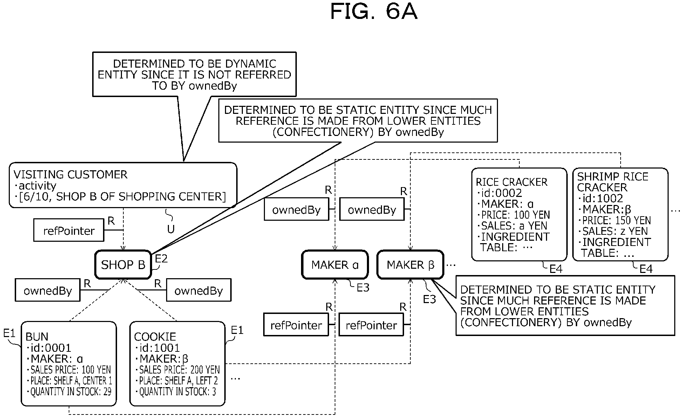

FIG. 6A is a diagram illustrating an example of characteristic-by-characteristic classification of the entities according to the embodiment. A data structure itself of the digital twin illustrated in FIG. 6A is similar to that of (a) of FIG. 1.

As the relationships R of the entities E illustrated in FIG. 6A, owendBy that indicates the upper-lower relationship in the real world and refPointer that does not indicate the upper-lower relationship of the relation between the entities exist.

Thus, the query execution apparatus 100 extracts, based on the relation indicating the upper-lower relationship, a dynamic or static characteristic of the entities that is normally unknown. In a case where the upper-lower relationship of the entities exists, the query execution apparatus 100 determines classification that creation and deletion of an upper entity are infrequent (static) and creation and deletion of a lower entity are frequent (dynamic).

For example, since much reference is made to the shop B (entity E2) illustrated in FIG. 6A by using owendBy from the lower digital twins (entities E1), the query execution apparatus 100 determines that the shop B (entity E2) is a static entity. Since much reference is made to the makers α, β, ... (entities E3) by using owendBy from the lower digital twins (entities E4), the query execution apparatus 100 determines that the makers α, β, ... (entities E2) are static entities.

In contrast, since much reference is not made to the user U by using owendBy, the query execution apparatus 100 determines that the user U is a dynamic entity. The entities (products) E1 make much reference to the shop B by using owendBy and are positioned at a lower level. Thus, the query execution apparatus 100 determines that the E1 are dynamic entities. The entities (products) E4 make much reference to the makers α, β, ... by using owendBy and are positioned at a lower level. Thus, the query execution apparatus 100 determines that the E4 are dynamic entities.

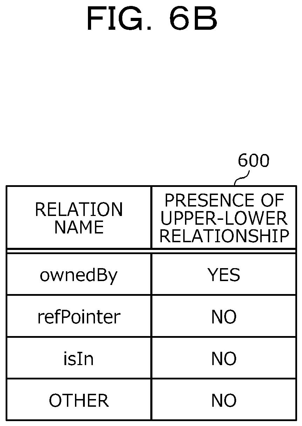

FIG. 6B is a diagram illustrating an example of a table indicating whether the upper-lower relationship is present between the entities. The query execution apparatus 100 presets the presence or absence of the upper-lower relationship between the entities described with reference to FIG. 6A in an upper-lower relationship presence/absence table 600 illustrated in FIG. 6B.

In the upper-lower relationship presence/absence table 600, the presence or absence (YES or NO) of the upper-lower relationship is set on a relation name-by-relation name basis. For example, in the setting, the relation "owendBy" has the upper-lower relationship (YES), and the other relations such as "refPointer" do not have the upper-lower relationship (NO). In the example illustrated in FIG. 6B, in the setting, a relation "isIn" does not have the upper-lower relationship (NO) in the upper-lower relationship presence/absence table 600. An example in which this "isIn" has the upper-lower relationship (YES) will be described later.

The query execution apparatus 100 creates the upper-lower relationship presence/absence table 600 of the diagram 6B corresponding to the data structure illustrated in the diagram 6A. Thus, when processing the data, the query execution apparatus 100 refers to the setting of the upper-lower relationship presence/absence table 600 to determine the upper-lower relationship between entities of the digital twin and static or dynamic entities.

Creation and deletion of the static entity are infrequent, and the number of static entities is small. Thus, it is highly probable that the entity exists at a plurality of times of obtaining of queries in the second and subsequent obtaining of queries and the same entity is referred to.

Accordingly, the query execution apparatus 100 according to the embodiment uses the static entity as the starting point of parallel processing (see (b) of FIG. 1) after determining whether the upper-lower relationship is present by referring to the upper-lower relationship presence/absence table 600 between the entities illustrated in the FIG. 6B. In the second or subsequent input of the query, as illustrated in (b) of FIG. 1, the query execution apparatus 100 divides the query into "A" and "B" with the static entity in the middle of the query set as the starting point and executes the divided queries "A" and "B" in parallel.

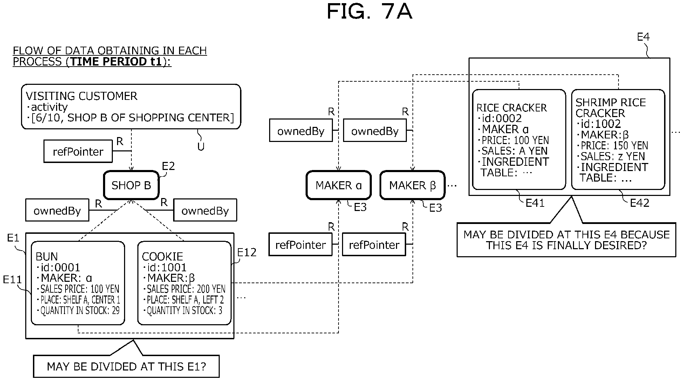

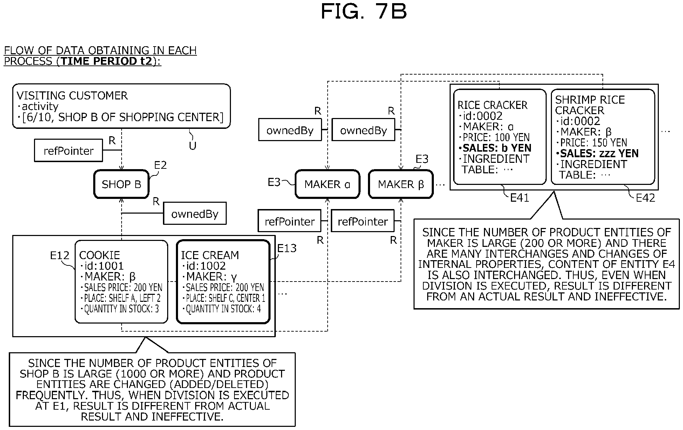

FIGs. 7A and 7B are diagrams illustrating a problem with the division with dynamic entities set as the starting points. FIG. 7A illustrates a flow of data obtaining when the query is divided in a time period t1, and FIG. 7B illustrates a flow of data obtaining when the query is divided in a time period t2.

In the time period t1 illustrated in FIG. 7A, it is considered that the query is divided at the dynamic entities E1 (products E11, E12). Also, since the data of the entities E4 is finally desired in the digital twin search, it is considered that the query is divided at the entities E4 (E41, E42).

However, as illustrated in FIG. 7B, in the time period t2, the number of the entities E1 of the shop B is large (for example, 1000 or more) and the data content is frequently changed (added/deleted). Accordingly, when the division is executed at E1, the result is different from an actual result and ineffective. For example, a product E11 that has existed in the time period t1 illustrated in FIG. 7A does not exist (has been deleted) due to sold-out or the like in the time period t2 illustrated in FIG. 7B, and a product E13 that has not existed in the time period t1 illustrated in FIG. 7A is newly on sale (added) in the time period t2 indicated in FIG. 7B.

As illustrated in FIG. 7B, since the number of entities E4 of the makers α, β, ... is large (for example, 200 or more) and there are many interchanges and changes in internal properties, the content of the entities E4 is also interchanged. Accordingly, even when the division is executed at the entities E4, the result is different from an actual result and ineffective. For example, the internal properties (sales) of the products E41 and E42 are changed from a to b and z to zzz, respectively, between the time period t1 illustrated in FIG. 7A and the time period t2 illustrated in FIG. 7B.

As described above, in a case where the division of the query is attempted with an entity other than a static entity (such as a dynamic entity) set as the starting point, data obtaining executed in parallel is ineffective due to the changes in the entities. Accordingly, as described above, the division with a static entity set as the starting point is effective.

From the above description, the following conditions 1 to 3 are derived. 1: An application or a service that uses the digital twin may generate a query from processing. 2: When the relation of the upper-lower relationship between the entities is used, whether the characteristics of the entities are static or dynamic may be determined. 3: The query may be decomposed with the entity set as the starting point and executed in parallel.

Accordingly, in the query of an application or a service that uses the digital twin, the query execution apparatus 100 according to the embodiment uses the relation indicating the upper-lower relationship between the entities to determine the characteristic of the static or dynamic entity. The query execution apparatus 100 divides the query at the static entity and executes the divided queries in parallel. Thus, the query execution apparatus 100 performs the data processing up to the data processing result by the digital twin search after the query is obtained efficiently and reduces the obtaining time.

### (Outline of Data Processing)

The query execution apparatus 100 performs the data processing in the following procedure of processes A to D. A: For the query having been input, the query execution apparatus 100 executes the processing as usual for the first time and extracts the query.

B: After the execution of the processing in A above, the query execution apparatus 100 analyzes the query. In the query analysis, the query execution apparatus 100 calculates the dynamic/static of the entities in the query and generates a parallel execution pattern.

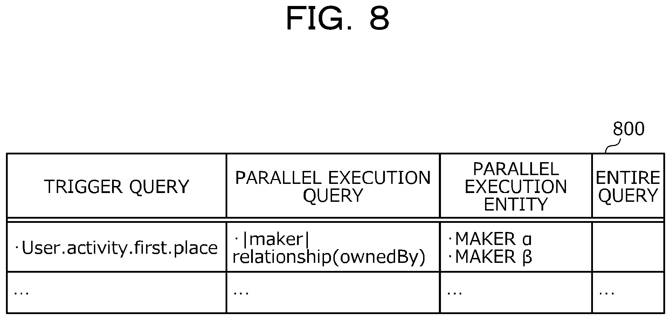

FIG. 8 is a diagram illustrating an example of a query parallel execution pattern table. After the first query execution, the query execution apparatus 100 creates a query parallel execution pattern table 800. The query parallel execution pattern table 800 is created to determine whether to execute the query in parallel.

The query parallel execution pattern table 800 includes items of a trigger query, a parallel execution query, a parallel execution entity, and an entire query. The trigger query is the top of the query having been executed (User.activity.first.place indicated by 1.1 of (b) of FIG. 1), and the query execution apparatus 100 stores it to perform matching for the second time or after. The parallel execution query is the query string ("B" in (b) of FIG. 1 (|maker| relationship(ownedBy)) to be executed in parallel.

The parallel execution entity is the entity serving as a base point of the execution in the parallel execution query and is the makers α and β illustrated in (a) and (b) of FIG. 1. The entire query is a combination of the queries of the entirety of the processing.

C: The query execution apparatus 100 executes the processing for the second or subsequent query that has been input.

C-1: The query execution apparatus 100 extracts the query at the time of execution and searches whether the trigger query (User.activity. first.place) of the query parallel execution pattern matches the current query "A".

C-2: In a case where the execution of the same query is detected, the query execution apparatus 100 divides the query into a leading-stage query "A" and a parallel execution query "B" (|maker| relationship(ownedBy)) with the entities of the maker α and the maker β set as the base and executes "A" and "B" in parallel.

D: After the execution of the processing of "A" and "B", the query execution apparatus 100 compares the entire query and the current query with each other.

D-1: In a case where the queries are the same as a result of the comparison, the query execution apparatus 100 outputs the results of the queries executed in parallel.

D-2: In a case where the queries are different from each other as a result of the comparison, the query execution apparatus 100 discards the parallel execution results, executes the latter-half query based on the latest result, and outputs the result.

### (Example of Actual Data of Digital Twin)

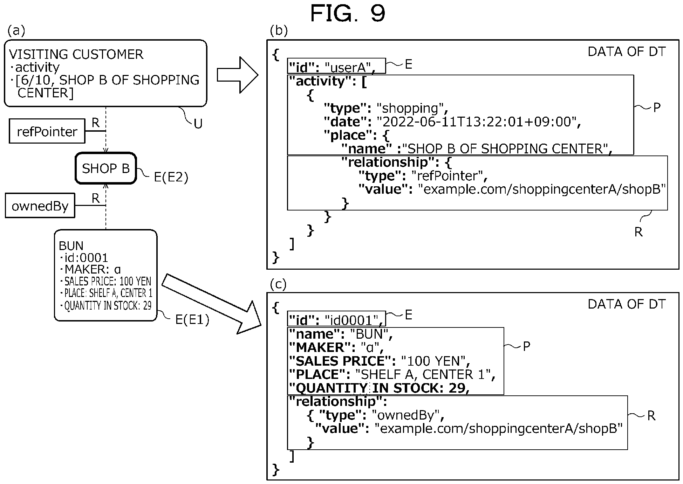

FIG. 9 is a diagram illustrating an example of the actual data of the digital twin. In (a) of FIG. 9, an actual structural example of the entity E, the property P, and the relationship R of the digital twin (DT) is indicated.

In (b) of FIG. 9, an example of the actual data of the relationship of the visiting customer (user U) with the shop B in the example of data structure illustrated in (a) of FIG. 9 is indicated. The entities (user U, property P) are related to the entity E2 (shop B) by using the relationship R (refPointer).

In the data content illustrated in (b) of FIG. 9, for example, an identifier (id) "userA" is set for the entity E. For the property P, a type "shopping", a date "2022-06-11T13:22:01+09:00 (date)", and a place "SHOP B OF SHOPPING CENTER" are set. For the relationship R, a value "expample.com.shoppingcenterA/shopB (information of shop B, URL)" and the type "refPointer" of the relationship are set.

In (c) of FIG. 9, an example of the actual data of the relationship of the entity E1 (product) with the shop B in the example of data structure illustrated in (a) of FIG. 9 is indicated. The entity E1 (product, property P) is related to the entity E2 (shop B) by using the relationship R (owendBy). In the data content illustrated in (c) of FIG. 9, for example, the id "id0001" is set for the entity E. For the property P, a name "BUN (PRODUCT NAME)", the MAKER "α", a SALES PRICE "100 YEN", the PLACE "SHELF A, CENTER 1", and a QUANTITY IN STOCK "29" are set. For the relationship R, the value "expample.com.shoppingcenterA/shopB (information of shop B, URL)" and the type "owendBy" of the relationship are set.

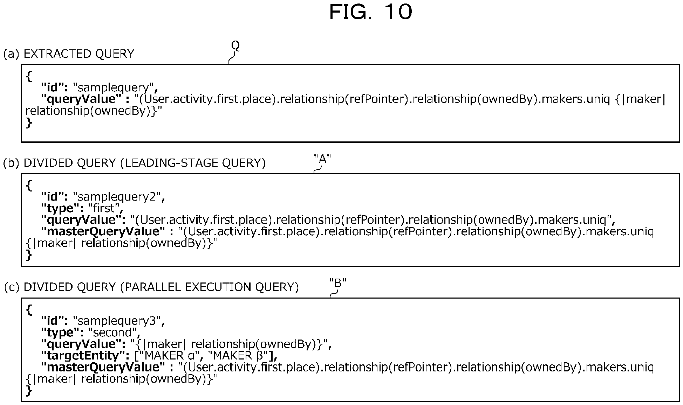

FIG. 10 is a diagram illustrating a detailed example of the query data at the time of parallel execution. In (a) of FIG. 10, the extracted query is illustrated. This query Q is, for example, the second or subsequent query that has been input and has id "samplequery" and queryValue which is the value of the query Q.

It is assumed that queryValue is "(User. activity. first. place).relationship(refPointer).relationship(ownedBy).makers.uniq{|maker|relationship(ownedBy )}".

The query execution apparatus 100 divides the query Q illustrated in (a) of FIG. 10 into a leading-stage query "A" illustrated in (b) of FIG. 10 and a trailing-stage query "B" illustrated in (c) of FIG. 10. For the leading-stage query "A" illustrated in (b) of FIG. 10, the query execution apparatus 100 sets the id as "samplequery2", the type as "first" indicating the leading-stage query, queryValue, and masterQueryValue.

Here, queryValue is a value of a leading-stage portion of the divisions of the query Q "(User.activity.first.place).relationship(refPointer).relationship(ownedBy).makers.uniq", and masterQueryValue is a value of the entirety of the query Q indicated in (a) of FIG. 10.

For the trailing-stage query "B" illustrated in (c) of FIG. 10, the query execution apparatus 100 sets the id as "samplequery3". Also, the query execution apparatus 100 sets the type as "second" indicating the trailing-stage query, queryValue, targetEntity (target entity), and masterQueryValue.

Here, queryValue is a value of a trailing-stage portion of the divisions of the query Q "{|maker| relationship (ownedBy)}", targetEntity is "MAKER α", "MAKER β", and masterQueryValue is the value of the entirety of the query Q indicated in (a) of FIG. 10.

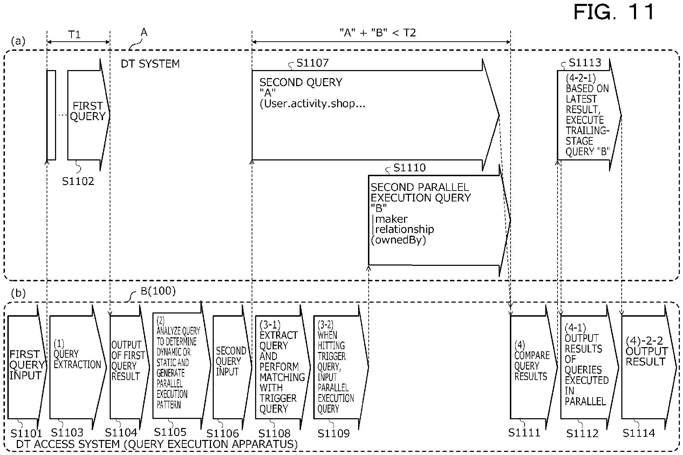

FIG. 11 is a timing chart illustrating the data processing time according to the embodiment. In FIG. 11, an example of a configuration in which a DT access system B accesses a digital twin (DT) system A that holds digital twin data. The above-described query execution apparatus 100 corresponds to the DT access system B.

In response to input of a first query (step S1101), the DT access system B transmits an Api request to the DT system A. The DT system A executes first query processing in processing time T1 (step S1102) and outputs a first query result to the DT access system B. The DT access system B outputs the first query result (step S1104).
(1) The DT access system B performs extraction for the query input in step S1101 (step S1103). The extraction in step S1103 is performed in parallel with the first query processing by the DT system A (step S1102).
(2) After step S1104, the DT access system B analyzes the query extracted in step S1103 to determine whether the characteristic of the entity is static or dynamic and generates the parallel execution pattern (step S1105). After that, in response to input of a second query (step S1106), the DT access system B transmits an Api request to the DT system A. The DT system A executes second query processing (step S1107). In step S1107, the processing of the divided leading-stage query "A" is executed.
(3-1) The DT access system B extracts the second query input in step S1106 and performs matching with a trigger query (query of "A") (step S1108). (3-2) Next, when a result of the matching in step S1108 hits (matches) the trigger query, the DT access system B inputs the trailing-stage query "B" to be executed in parallel (step S1109). The processing in steps S1108 and S1109 is performed in parallel with the second query processing by the DT system A (step S1107).

As a result of step S1109, the DT access system B transmits an Api request to the DT system A. The DT system A executes processing of a second parallel execution query "B" (step S1110).

The DT system A executes the processing of the leading-stage query "A" (step S1107) and the processing of the trailing-stage query "B" (step S1110) in parallel. The processing time taken to execute the leading-stage query "A" and the trailing-stage query "B" in parallel may be reduced compared to the time T2 taken to execute the second query alone (see FIG. 4) (processing time of "A" + "B" < T2).

As a second query result, the DT system A outputs query results of step S1107 and step S1110 to the DT access system B. (4) The DT access system B compares the query results of the processing of the leading-stage query "A" in step S1107 and the processing of the trailing-stage query "B" in step S1110 (step S1111). (4-1) The DT access system B outputs the results of the queries executed in parallel (step S1112).

In a case where a problem with the result of the query arises due to the parallel execution, the DT access system B accesses the DT system A again. (4-2-1) Based on the latest result, the DT system A executes the trailing-stage query "B" again (step S1113) and outputs the query result to the DT access system B. (4-2-2) The DT access system B outputs the query result (step S1114). Thus, the processing up to the input of the second query has been completed.

After that, at the time of the third or subsequent input of the query, the DT system A and the DT access system B execute the processing in and after step S1106 in a similar manner. In a time axis on the horizontal axis illustrated in FIG. 11, the part of "FIRST QUERY" and the part of "SECOND QUERY "A", "B"", which correspond to a query execution time period, actually occupy most of the time.

In the above-described processing, the parallel execution pattern generated in step S1105 performs the query division with the entity E2 (shop B), the data content of which is infrequently changed, set as the starting point. As a plurality of queries to be input as the second or subsequent input, a query similar to the previous query often appears again. According to the embodiment based on this premise, as the number of queries increases, the data processing time may be significantly reduced compared to the existing technique due to parallel execution for many times of input of the query.

According to the embodiment, reduction of the obtaining time of the entity by tracking the multistage relations of digital twins may be realized. When it is assumed that the time taken to obtain a single entity is 50 ms, the number of entities obtained in the entirety of the query is calculated as follows: leading-stage query: 1000 + trailing-stage query: 1000 × the number of makers (two or more in the example). Although static entities are actually included, the number of static entities is small, and accordingly, the number is within an error range. When the divided queries are executed in parallel, the data processing time for the queries may be reduced to around the time for only the trailing-stage query (reduction of 1000 × 50 ms = 50 seconds (corresponding to several tens percent). The query execution apparatus 100 does not perform the reduction in a case where the input query does not hit the query pattern that is executable in parallel.

### (Other Example of Data Processing - Example of Application to isIn)

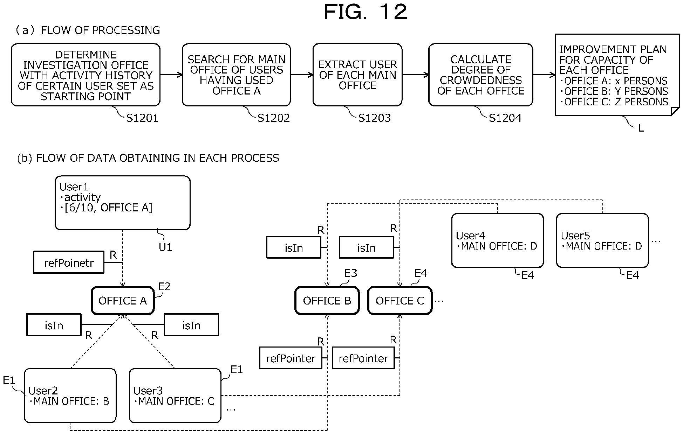

FIG. 12 is a diagram illustrating another example of the data processing executed by the query execution apparatus 100. In the above description, the relationship has been described with owendBy as the example. In FIG. 12, as data processing example applied to isIn, for example, the following example is described: on the assumption that users move between a plurality of offices to perform tasks, a main office of a user on a personnel DB, who is present in a certain office, is searched for and a vacant office is investigated. In the example, it is assumed that the capacity of the offices is appropriately distributed in plan. However, a tendency of actual use of the offices deviates from the plan, and accordingly, the search is performed. Such a search is performed by, for example, a personnel department.

In (a) of FIG. 12, an example of a flow of the data processing executed by the query execution apparatus 100 is illustrated. The query execution apparatus 100 sequentially executes, for example, the following processes 1 to 5. 1: An investigation office (office A) is determined with an activity history of a certain user (User1) set as a starting point (step S1201). For example, the processing is started in a case where, for example, there is a complaint related to use from the user (User1) who uses the office A. 2: Main offices (offices B and C) of users (User2 and User3) who have used the office A are searched for (step S1202). 3: Respective users (User4 and User5) of the main offices (offices Band C) are extracted (step S1203). 4: The degree of crowdedness of each of the offices (offices A, B, and C) is calculated (step S1204). 5: An improvement plan L for the capacity of each office is presented.

In (b) of FIG. 12, a data processing example is illustrated. As in the above description, the entities E and the relationships R corresponding to respective parts are illustrated. It is assumed that offices of User2 and User3 who are dynamic entities E1 may daily or hourly change and are in flux. In this case, the probability of the same entities E1 being used at the next query timing such as the second or subsequent query timing is low. Accordingly, it is highly probable that the query results are different in the above-described query division and parallel execution.

The query execution apparatus 100 performs division in the offices B and C that are the owners (static entities E3) of User2 and User3 in isIn. Since the offices B and C are the main offices of User2 and User3 and are entities the content of which is not substantially changed, it is highly probable that the same entities are used at the next query timing. In this case, the query execution apparatus 100 may perform an efficient search by dividing the query into the leading-stage query and the trailing-stage query with the entities E3 and E4 set as the starting points and executing the divided queries in parallel.

According to the example of application of isIn illustrated in FIG. 12, the upper-lower relationship presence/absence table 600 between the entities illustrated in FIG. 6B is set such that "PRESENCE OF UPPER-LOWER RELATIONSHIP" is set to "YES (present)" only for isIn, and the query execution apparatus 100 refers to this upper-lower relationship presence/absence table 600.

### (Functional Block Diagram of Query Execution Apparatus)

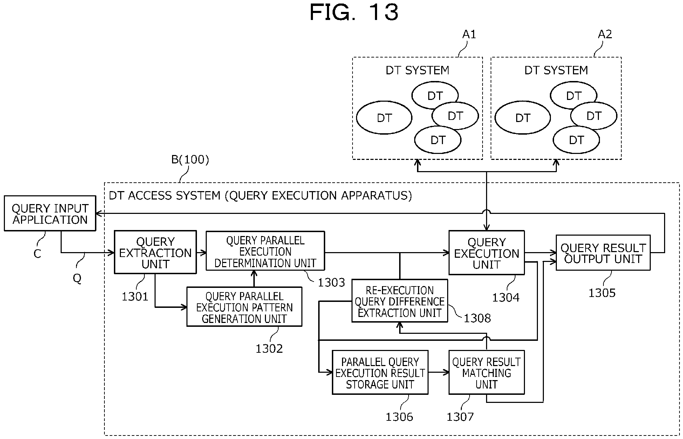

FIG. 13 is a functional block diagram of the query execution apparatus according to the embodiment. The query execution apparatus 100 corresponds to the above-described DT access system B (see FIG. 11).

The query Q created by a query input application C is input to the query execution apparatus 100. The query execution apparatus 100 includes a query extraction unit 1301, a query parallel execution pattern generation unit 1302, a query parallel execution determination unit 1303, a query execution unit 1304, and a query result output unit 1305. The query execution apparatus 100 also includes a parallel query execution result storage unit 1306, a query result matching unit 1307, and a re-execution query difference extraction unit 1308.

The query extraction unit 1301 extracts a query based on the relationship between the entities of the digital twin DT from an access request to the digital twin DT indicated by the query Q created by the query input application C. The query extraction unit 1301 extracts the query by referring to the upper-lower relationship presence/absence table 600 (FIG. 6).

The query parallel execution pattern generation unit 1302 calculates the dynamic or static characteristic of the entity in the query Q according to a reference amount of a specific relation of the entity and generates the query parallel execution pattern obtained by dividing the query Q based on the calculated characteristic.

Regarding the query parallel execution pattern generated by the query parallel execution pattern generation unit 1302, the query parallel execution determination unit 1303 determines whether the current query Q is able to be subjected to the parallel execution. The query parallel execution determination unit 1303 refers to the query parallel execution pattern table 800 (FIG. 8) to determine whether the current query Q is able to be subjected to the parallel execution. In a case where the determination result indicates that the query is able to be subjected to the parallel execution, the query parallel execution determination unit 1303 divides the original query into the leading-stage query "A" and the trailing-stage query "B" and outputs the queries to the query execution unit 1304 as queries subjected to the parallel execution.

For queries output from the query parallel execution determination unit 1303, the query execution unit 1304 accesses the corresponding DT system A on a query-by-query basis and performs search processes respectively corresponding to the leading-stage query "A" and the trailing-stage query "B". The query result output unit 1305 outputs, to the query input application C, the query result of the search by the query execution unit 1304.

The parallel query execution result storage unit 1306 stores the result of the query executed in parallel. The query result matching unit 1307 checks the execution result of the query that has undergone the parallel execution. In a case where the parallel execution result is correct (for example, a result entity of the leading-stage query "A" and a start entity of the trailing-stage query "B" are equal to each other), the query result matching unit 1307 outputs the trailing-stage query result to the query result output unit 1305. In contrast, in a case where the parallel execution result is not correct, the query result matching unit 1307 outputs the trailing-stage query "B" having been executed in parallel and a correct trailing-stage query "B" to the re-execution query difference extraction unit 1308.

The re-execution query difference extraction unit 1308 compares the trailing-stage query "B" having been executed in parallel and the correct trailing-stage query "B" that have been received from the query result matching unit 1307 and generates a difference query including only the entities desirably to be obtained. The re-execution query difference extraction unit 1308 outputs the difference query to the query execution unit 1304 and outputs the difference execution result to the parallel query execution result storage unit 1306.

When the trailing-stage query having been executed in parallel and the correct trailing-stage query are partially different from each other, the re-execution query difference extraction unit 1308 generates a difference between the trailing-stage queries and executes only the difference query. When the re-execution query difference extraction unit 1308 is provided, the efficiency of reduction of the obtaining time may be improved.

### (Example of Hardware Configuration of Query Execution Apparatus)

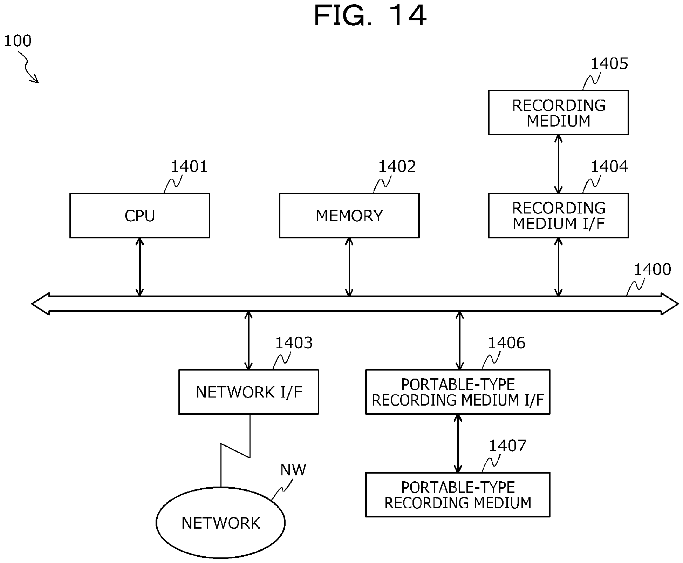

FIG. 14 is a diagram illustrating an example of a hardware configuration of the query execution apparatus 100. The query execution apparatus 100 may be configured with a computer (information processing apparatus) such as a server including general-purpose hardware illustrated in FIG. 14.

The query execution apparatus 100 includes a central processing unit (CPU) 1401, a memory 1402, and a network interface (I/F) 1403. The query execution apparatus 100 also includes a recording medium I/F 1404, a recording medium 1405, a portable-type recording medium I/F 1406, and a portable-type recording medium 1407. These components are coupled to each other via a bus 1400.

The CPU 1401 functions as a control unit that controls the entire query execution apparatus 100. The CPU 1401 may include a plurality of cores. The memory 1402 includes, for example, a read-only memory (ROM), a random-access memory (RAM), a flash ROM, and the like. For example, the flash ROM stores a program of an operating system (OS), the ROM stores application programs, and the RAM is used as a work area for the CPU 1401. Each of the programs stored in the memory 1402 causes the CPU 1401 to execute coded processes by being loaded to the CPU 1401.

The network I/F 1403 is coupled to a network NW through a communication line and is coupled to an external computer through the network NW. The external computer is, for example, an external terminal device or the like including the query input application C. The network I/F 1403 controls an interface between the network NW and the inside of the apparatus and controls input and output of data from and to the external computer. As the network I/F 1403, for example, a modem, a local area network (LAN) adapter, or the like may be adopted.

The recording medium I/F 1404 controls reading and writing of data from and to the recording medium 1405 in accordance with the control of the CPU 1401. The recording medium 1405 stores the data written under the control of the recording medium I/F 1404. Examples of the recording medium 1405 include, for example, a magnetic disk, an optical disc, and the like.

The portable-type recording medium I/F 1406 controls reading and writing of data from and to the portable-type recording medium 1407 in accordance with the control of the CPU 1401. The portable-type recording medium 1407 stores the data written under the control of the portable-type recording medium I/F 1406. Examples of the portable-type recording medium 1407 include, for example, a compact disc (CD)-ROM, a Digital Versatile Disk (DVD), a Universal Serial Bus (USB) memory, and the like.

The query execution apparatus 100 may include, for example, an input device, a display, and the like in addition to the above-described components.

The functions of the query extraction unit 1301 to the re-execution query difference extraction unit 1308 illustrated in FIG. 13 may be implemented when the CPU 1401 illustrated in FIG. 14 executes a program. The functions of the upper-lower relationship presence/absence table 600 illustrated in FIG. 6 and the query parallel execution pattern table 800 illustrated in FIG. 8 may be implemented by using, for example, the memory 1402, the recording medium 1405, and the portable-type recording medium 1407 illustrated in FIG. 14.

### (Data Processing Example of Query Execution Apparatus)

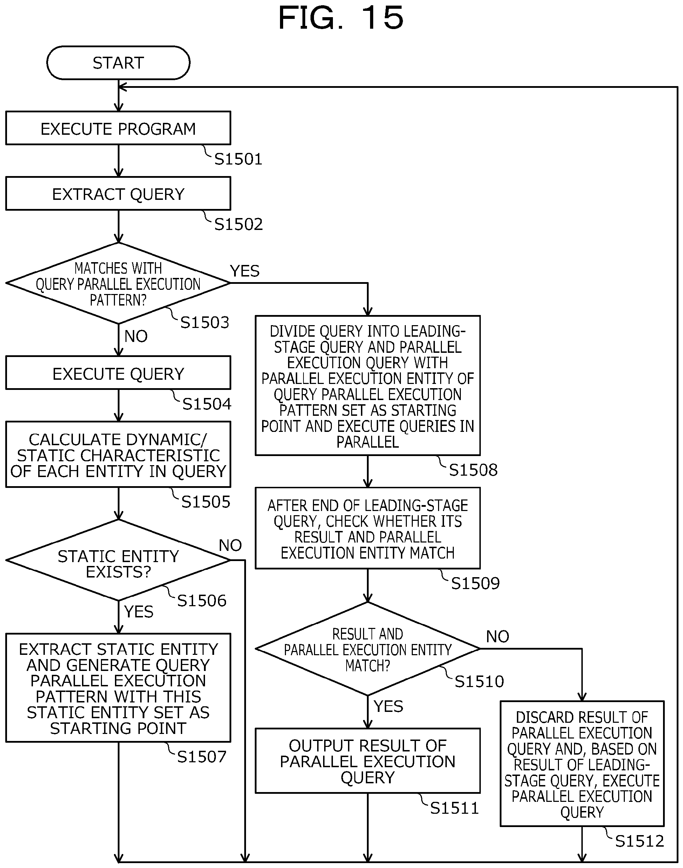

FIG. 15 is a flowchart illustrating a processing example executed by the query execution apparatus 100. In FIG. 15, content of the processing executed by the CPU1401 of the query execution apparatus 100 is illustrated.

The query execution apparatus 100 (CPU1401) performs the following processing by executing a program for performing query processing (step S1501). First, the query execution apparatus 100 extracts a query based on the relationship between the entities of the DT from the input query Q (step S1502).

Next, the query execution apparatus 100 determines whether the extracted query matches a query parallel execution pattern (step S1503). When the determination result is that the extracted query does not match the query parallel execution pattern (step S1503: No), the query execution apparatus 100 moves to processing in and after step S1504. In contrast, when the determination result is that the extracted query matches the query parallel execution pattern (step S1503: Yes), the query execution apparatus 100 moves to processing in and after step S1508.

In step S1504, the query execution apparatus 100 executes the query Q (step S1504). Next, the query execution apparatus 100 calculates the static/dynamic characteristic of each entity in the query Q (step S1505).

Next, the query execution apparatus 100 determines whether there exists a static entity among the entities calculated in step S1505 (step S1506). As a result of the determination, when the static entity exists (step S1506: Yes), the query execution apparatus 100 moves to processing in step S1507. In contrast, as a result of the determination, when the static entity does not exist (step S1506: No), the query execution apparatus 100 returns to the processing in step S1501.

In step S1507, the query execution apparatus 100 extracts the static entity, generates a query parallel execution pattern with this static entity set as the starting point (step S1507), and returns to the processing in step S1501.

In step S1508, the query execution apparatus 100 divides the query Q into a leading-stage query "A" and a parallel execution query (trailing-stage query "B") with the parallel execution entity of the query parallel execution pattern as the starting point and executes the queries in parallel (step S1508).

Next, after the processing of the leading-stage query "A" has been completed, the query execution apparatus 100 checks whether a result of the leading-stage query "A" matches the parallel execution entity (step S1509). When the result of the leading-stage query "A" and the parallel execution entity match each other (step S1510: Yes), the query execution apparatus 100 outputs the result of the parallel execution query (step S1511).

In contrast, when the result of the leading-stage query "A" and the parallel execution entity do not match each other (step S1510: No), the query execution apparatus 100 discards the result of the parallel execution result query (trailing-stage query "B"). Based on the result of the leading-stage query "A", the query execution apparatus 100 executes the parallel execution query (step S1512).

After the processing in step S1511 or step S1512, the query execution apparatus 100 returns to an initial state (step S1501).

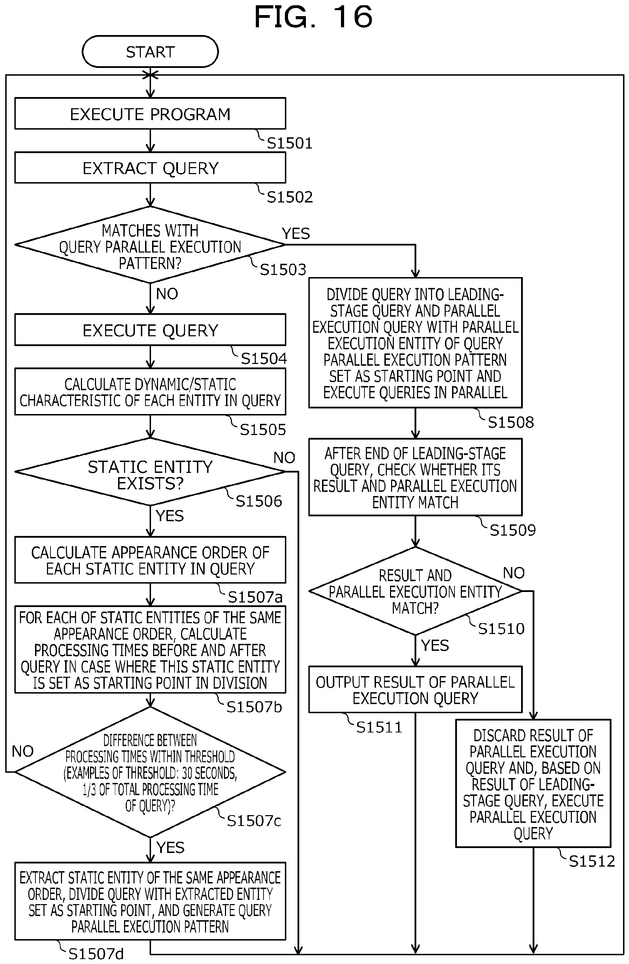

FIG. 16 is a flowchart illustrating the details of the processing example executed by the query execution apparatus 100. In FIG. 16, the query division processing (S1507) described with reference to FIG. 15 is illustrated in detail, and the other portions of the processing are denoted by the same step numbers as those in FIG. 15.

In S1507, first, the query execution apparatus 100 calculates an appearance order of each static entity in the query (step S1507a). The appearance order indicates a stage of the processing. For example, "SHOP B" illustrated in FIGs. 1 and 7B is the second, and "MAKER α, MAKER β" illustrated in FIGs. 1 and 7B is the fourth.

For each of the static entities of the same appearance order, the query execution apparatus 100 calculates the processing times before and after the query in a case where the static entity is set as the starting point of the division (step S1507b).

Next, the query execution apparatus 100 determines whether the difference between the processing times calculated in step S1507b is within a predetermined threshold (step S1507c). Examples of the threshold include, for example, 30 seconds, one third of the total processing time of the query, and the like. The query execution apparatus 100 determines, with the threshold of the processing time, whether the entire query is divided into the leading-stage and the trailing-stage that have a certain length. In a case where the difference between the processing times is within the threshold (step S1507c: Yes), the query execution apparatus 100 proceeds to processing in step S1507d. In contrast, in a case where the difference between the length of processing time exceeds the threshold (step S1507c: No), the position of the division is deviated to the leading-stage side or the trailing-stage side and the effect of the parallel processing is small. Thus, the query execution apparatus 100 does not divide the query and returns to the processing in step S1501.

In step S1507d, the query execution apparatus 100 extracts the static entity of the same appearance order, divides the query with the extracted entity as the starting point, and generates the query parallel execution pattern (step S1507d).

Two processes described below are performed in the processing example illustrated in FIG. 16. It is assumed that a single entity group of the same appearance order is selected, and the selected query is divided into two portions including "A" and "B".

The query execution apparatus 100 calculates the processing times for two points of division below. First division: The processing times before and after the shop B set as the starting point are calculated (for example, 3 seconds before the shop B and 87 seconds after the shop B). Second division: The processing times before and after the maker α and the maker β set as the starting point are calculated (for example, 40 seconds before the maker α and the maker β, and 50 seconds after the maker α and the maker β).

The query execution apparatus 100 selects the makers α and β side as the division starting point as indicated by "B" of FIG. 1 by checking the difference between the processing times before and after step S1507c.

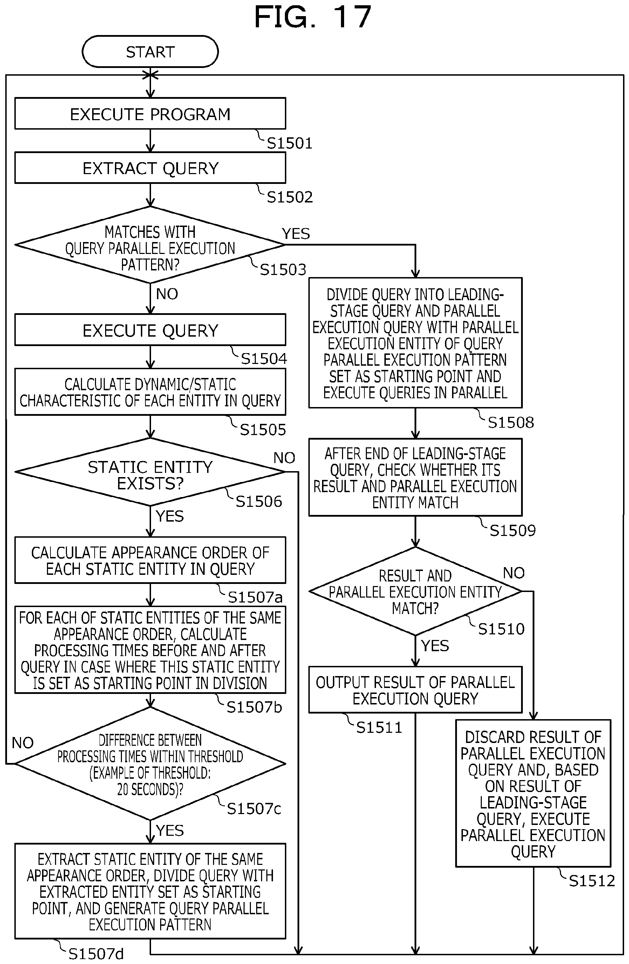

FIG. 17 is a flowchart illustrating the details of the processing example of the query execution executed by the query execution apparatus. In FIG. 17, the query division processing (S1507) described with reference to FIG. 15 is illustrated in detail, and the other portions of the processing are denoted by the same step numbers as those in FIG. 15. In FIG. 17, a processing example for determining whether the query may be further divided into a plurality of portions, for example, three portions is illustrated.

In the processing example illustrated in FIG. 17, to determine whether division into three portions is possible, the following three processes are performed. In the query division illustrated in FIG. 17, basic processing itself in step S1507 (step S1507a to step S1507d) which is processing at the time of division may be performed similarly to that of FIG. 16, and only the threshold used for threshold determination in step S1507c is changed (30 seconds to 20 seconds).

The query execution apparatus 100 calculates the processing times for the division into three sections below. First section: The processing time between the top of the query and the shop B is calculated (for example, 25 seconds). Second section: The processing time between the shop B and the maker α, maker β, ... is calculated (for example, 30 seconds). Third section: The processing time between the maker α, maker β, ... and the end of the query is calculated (for example, 35 seconds).

The query execution apparatus 100 calculates the variance of these three sections to be 16.66... In this case, since the calculation result of the variance is within the threshold, the query execution apparatus 100 executes the division into three. Calculation of the variance is well known as presented in the following URL. URL:https://sci-pursuit.com/math/statistics/variance.html#

According to the above description, the query execution apparatus 100 of the embodiment has been described by using shopping recommendation for the user U as a use case. However, the embodiment is not limited to this and may also be applied to a use case in which a list of shops around a visiting location is obtained from a user activity history, and sightseeing locations of the same type are searched for and recommended. Furthermore, the embodiment may be applied to the digital twin search in various use cases such as a use case in which information on a company is searched for and the same company is searched and recommended.

The query execution apparatus 100 according to the above-described embodiment executes queries to be input a plurality of times to a digital twin in which a predetermined relationship is provided between entities. The query execution apparatus 100 identifies a static entity data content of which is infrequently changed out of the entities in the query, divides the query into a plurality of divided queries with the identified static entity set as a starting point, and executes the divided queries in parallel. In such query division in which the entity the data content of which is infrequently changed is set as the starting point, queries similar to the previous query are input again in many cases for a plurality of queries to be input at the second and subsequent time. Based on such a premise, as the number of queries increases, the data processing time may be significantly reduced by the parallel execution for many times of query input. Many times of query input are desired to obtain the entities that track relationships in multiple stages in the digital twin. However, according to the embodiment, processing efficiency of query execution may be improved by appropriate query division and the parallel execution of the divided queries.

The query execution apparatus 100 extracts, from the query, the entities, the properties, and the relationships included in the digital twin. The query execution apparatus 100 may identify an entity having a specific relationship such as owendBy or isIn as the static entity. For example, when an entity having the relationship as the static entity in advance, the static entity may be easily identified out of the entities.

Regarding the division of the query, the query execution apparatus 100 determines whether to divide the query that has been input based on whether the query matches a query parallel execution pattern. The query execution apparatus 100 may divide and execute the query when the query matches the query parallel execution pattern and execute the query without being divided when the query does not match the query parallel execution pattern. In this way, whether to perform the division and the parallel execution on the input query may be appropriately determined, and accordingly, the processing efficiency may be improved.

The query execution apparatus 100 extracts the entities, the properties, and the relationships included in the digital twin from the query which is input for the first time and identifies the entity having the specific relationship as the static entity. The query execution apparatus 100 generates a query parallel execution pattern for dividing the query into a plurality of queries with the identified static entity set as the starting point. For the query input for the second time or after, the query execution apparatus 100 determines whether to divide the query based on whether the input query matches the generated query parallel execution pattern. The query execution apparatus 100 may divide the query when the query matches the query parallel execution pattern and execute the plurality of divided queries in parallel. As described above, when the first query to be input is analyzed and the query parallel execution pattern is generated, the queries input at a plurality of times at and after the second time may be executed in parallel based on the query parallel execution pattern. Accordingly, the processing efficiency of the query execution may be improved.

The query execution apparatus 100 may identify the static entity serving as the starting point of the division based on processing time of each of the divided queries in a case where a plurality of the static entities are present in the query and the query is divided on an entity-by-entity basis. For example, the query execution apparatus 100 sets the processing time in accordance with the number of divided queries. In this way, the query may be appropriately divided with the static entity as the starting point.

For a query execution result of the plurality of divided queries after the parallel execution, when the entities set as the starting points are equal to each other between the leading-stage query and the trailing-stage query of the divided queries that have been processed in parallel, the query execution apparatus 100 determines that the query execution result is correct and outputs a query result of the trailing stage query. When the entities set as the starting points of the divided queries are not equal to each other, the query execution apparatus 100 may generates a difference query for the trailing-stage query and input again the trailing-stage query based on the generated difference query. In this way, the parallel execution of the divided queries may be appropriately determined based on the execution result, and efficiency of the parallel processing of the divided queries may be improved.

The method for executing a query described according to the embodiment of the present disclosure may be implemented by causing a processor such as a server to execute a program prepared in advance. The program is recorded in a computer-readable recording medium such as a hard disk, a flexible disk, a CD-ROM, a DVD, or a flash memory, read from the recording medium by the computer, and executed by the computer. The present method may be distributed via a network such as the Internet.

## Claims

1. A method for executing a query, comprising:
identifying, by a computer, a static entity among entities in a query that is input to a digital twin in which a predetermined relationship is provided between entities, the static entity having data content that is infrequently changed;
dividing the query into a plurality of divided queries with the identified static entity set as a starting point; and
executing the divided queries in parallel.

2. The method according to claim 1, further comprising:
extracting entities, properties, and relationships included in the digital twin from the query; and
identifying an entity that has a predetermined relationship as the static entity.

3. The method according to claim 1, further comprising:
determining whether the query matches a predefined query parallel execution pattern;
dividing the query when the query matches the query parallel execution pattern; and
executing the query without being divided when the query does not match the query parallel execution pattern.

4. The method according to claim 1, further comprising:
extracting entities, properties, and relationships included in the digital twin from a second query that is input to the digital twin before the first query is input to the digital twin;
identifying an extracted entity that has a predetermined relationship as the static entity;
generating a query parallel execution pattern used to divide a query into a plurality of queries with the identified static entity set as a starting point;
determining whether the first query matches the generated query parallel execution pattern;
dividing the first query when the first query matches the query parallel execution pattern.

5. The method according to claim 4, further comprising:
identifying the static entity serving as the starting point of the division based on processing time of each of the divided queries in a case where a plurality of static entities are present in the first query and the first query is divided on an entity-by-entity basis.

6. The method according to claim 5, wherein
the processing time is set in accordance with a counted number of the divided queries.

7. The method according to claim 1, further comprising:
when entities set as starting points of a leading-stage query and a trailing-stage query of the divided queries that have been processed in parallel are equal to each other, determining a query execution result to be correct and outputting a query result of the trailing-stage query; and
when the entities set as the starting points of the divided queries are not equal to each other, generating a difference query for the trailing-stage query and inputting the generated difference query to the digital twin.

8. A query execution program that causes a computer to execute the method according to claim 1.
